# NEW EUROPEAN PATENT SPECIFICATION

(11) **EP 2 508 827 B2**
(45) Date of publication and mention of the opposition decision: **16.01.2019**
(45) Mention of the grant of the patent: 01.07.2015
(21) Application number: 12002261.1
(22) Date of filing: 29.03.2012
(51) Int. Cl.: F27B 3/20, F27B 3/22, F27D 17/00, C03B 5/235

(54) **Method and device for melting melting stock**
Verfahren und Vorrichtung zum Schmelzen einer Schmelzmasse
Procédé et dispositif de fusion de stock de fusion

(30) Priority: 07.04.2011 EP 11002931; 02.02.2012 EP 12000696
(43) Date of publication of application: 10.10.2012
(73) Proprietor: Linde Aktiengesellschaft, 80331 München (DE)
(72) Inventor: Mieth, Rainer, 85435 Erding (DE); Simpson, Neil, Ayton, By Eyemouth, TD14 5QX (GB); Wilcox, Richard, Wickersley, Rotherham S66 1DX (GB)
(74) Representative: Gellner, Bernd

(56) References cited:
- EP-A1- 0 498 937
- WO-A1-2010/114714
- US-A- 3 592 623
- US-A- 5 779 754
- US-A- 5 906 119

## Description

The present invention relates to a method and a device for melting melting stock, such as glass, according to the respective preambles of the independent patent claims.

### Prior Art

Melting glass using a glass furnace is known, the furnace being heated via a frontally attached burner port. Corresponding burners are typically referred to as frontal burners or U-flame burners; corresponding furnaces are referred to as a U-flame trough (English: "end-port furnace"). Such furnaces are typically operated regeneratively using two burner ports alternately, i.e., fuel and an oxidizer (typically air) is supplied to only one of the two burner ports, while the hot exhaust gases are exhausted via the air supply opening of the other burner port. The required heat for maintaining the glass melt is generated by the combustion of the fuel (the start up of the melt or "firing up" is typically performed slowly via separate auxiliary burners or the like). The combustion gases cover a U-shaped path in the furnace, because of which they are given the above designations. The burner ports are alternately operated in the function of a burner port and an exhaust gas port, a changeover occurring after a specific cycle time, for example, between 10 and 30 min., in particular 15 to 25 min. A heat exchanger (also referred to as a regenerator, English "regenerator") is connected upstream from the supply opening of a burner port in each case in the supply path of the oxidizer (air). For example, heat storage bricks, which were previously heated by exhausted exhaust gas to temperatures of approximately 1500°C, are located in the heat exchanger. In the next cycle, oxidizer (air) is conducted via the heated heat storage bricks to the burner port, the inflowing air being able to be preheated to approximately 1350°C. This regenerative alternating operation (English: "swap") of the two burner ports is the foundation for many industrial furnaces as the Siemens-Martin method.

The terms "upstream" and "downstream" refer hereafter, if reference is not explicitly made to another stream, to the main flow direction of the combustion gases, which exit from the burner port(s) and leave the furnace via the exhaust gas port(s). In the case of an end-port furnace, the combustion gases cover a substantially U-shaped path from the burner port through the furnace chamber back to the exhaust gas port. The main flow path extends from a burner port, which is located in one front side of the furnace, in the longitudinal direction of the furnace and then reverses, the combustion gases leaving the furnace via the exhaust gas port arranged in the front side adjacent to the burner port. After the two ports are switched over, the previous exhaust gas port operates as the burner port and the previous burner port operates as the exhaust gas port. The main flow direction in the furnace also reverses accordingly and extends opposite to the previous main flow direction.

Nitrogen oxides (NOx) may arise during the combustion. Efforts have been made to reduce the nitrogen oxide fraction in the exhaust gas. In metal smelting or in heat treatment furnaces, so-called FLOX combustion or flameless combustion is preferably used for this purpose. The exhaust gases are strongly recirculated in the combustion chamber and mixed with the combustion air in this case. In this way and due to the delayed mixing of air and combustion gas, a flame front can no longer form. At sufficiently high temperatures of at least 800°C, the fuel oxidizes in the entire combustion chamber volume while forming very homogeneous temperatures. The formation of nitrogen oxides, which occurs above all at the flame boundary having its high peak temperatures, is reduced. The application of flameless combustion in the case of molten glass is subject to restrictions, however, since in this case it is necessary to deviate from long-proven production methods having their empirically obtained production details.

More recently, NOx limiting values of less than 800 mg/Nm³ or even less than 700 mg/Nm³ have been required. Known glass melting methods do not typically achieve this limiting value. Because of the high processing temperatures, thermal NOx arises, typically at over 1100 mg/Nm³ exhaust gas.

Substoichiometric operation of the burners in such a manner that carbon monoxide (CO) is generated is also known. Carbon monoxide reduces nitrogen oxides to form carbon dioxide and nitrogen. However, the occurring CO emissions result in elevated temperatures in the exhaust gas regenerator (heat exchanger) because of post-combustion, which can result in damage and even destruction of the regenerator. For this reason, this type of operation is generally precluded.

WO 2010/114714 A1, which also relates to an end-port burner, proposes another type of reduction of nitrogen oxides. A fuel burner, which is preferably arranged on the hotspot of the furnace or in its proximity and is preferably operated substoichiometrically i.e., fuel-rich, is located downstream from a burner port operated to form a combustion flame. A further fuel burner is arranged further downstream, which is operated superstoichiometrically, i.e., oxygen-rich. In practice, the two fuel burners are preferably located on the opposing side walls of the furnace in front of the outlet port for liquid glass. Oil or gas can be used as the fuels. The use of the fuel-rich, substoichiometrically operated burner results in an expansion of the fuel-rich areas in the furnace, so that the formation of NOx is decreased because of a lack of oxygen and because of the produced CO. Further downstream and therefore in the direction of the exhaust gas side of the furnace, the second oxygen-rich and therefore superstoichiometrically operated fuel burner ensures thorough mixing of the exhaust gases with an oxygen-rich flame and therefore the most complete possible post-combustion of incompletely combusted fuel components. The two fuel burners, which are also referred to as "hotspot burners", are preferably arranged opposite one another in the third of the longitudinal walls of the furnace located further downstream, and are therefore located in the area of the U-shaped reversal of the combustion gas stream in the furnace. Alternating furnace operation is readily possible, in that the fuel burners are switched from substoichiometric to superstoichiometric operation (or vice versa). Significantly reduced NOx exhaust gas values have already been able to be measured using this method.

Moreover, a reduction of nitrogen oxides can typically also be performed by means of exhaust gas posttreatment and purification. Such exhaust gas purification devices are space-intensive and investment-intensive and typically require high operating and maintenance costs. Alternatively or additionally, the melting area in the furnace could be significantly enlarged to reduce the specific heat load of the furnace. The disadvantage here would be a significantly larger furnace with unchanged performance.

One problem on which the present invention is based is therefore the reduction of the nitrogen oxide fraction in the exhaust gas of above-described melting furnaces, in particular for glass melting and glass processing. The solution is to be as space-saving and cost-saving as possible.

### Description of the Invention

The invention proposes a method for melting melting stock, in particular glass, according to Claim 1. A corresponding device is the subject matter of Claim 9. Preferred embodiments result from the respective subclaims and the following description.

The terms furnace and melting furnace are used synonymously in connection with the invention.

The invention relates to a method for melting melting stock, such as glass, in a furnace, which is implemented as an end-port furnace, two ports being provided in a front side of the furnace, which are alternately operated as the burner port and the exhaust gas port. A fuel and an oxidizer are supplied to the burner port and caused to react (are combusted). The resulting combustion gases flow along an essentially U-shaped main flow direction through the furnace to the exhaust gas port. The two legs of the U-shaped main flow direction extend essentially perpendicularly to the furnace front side having the burner port and essentially parallel to the side walls of the furnace. Air is typically used as the oxidizer, which is supplied to the burner port, because of which the latter is also frequently referred to as a "air burner". Downstream from this burner port, a fuel-rich gas stream is introduced into the furnace The fuel-rich gas stream may be introduced into the furnace via a substoichiometrically operated burner which is frequently also referred to as an "oxy-fuel burner" or, since it is advantageously arranged in the area of the hotspot of the furnace, as a "hotspot burner", abbreviated "HSB". The introduction of the fuel-rich gas stream results in an elevated energy introduction in the area of the hotspot of the furnace and therefore supports the convection of the melt in the furnace. On the other hand, it reduces the formation of NOx because of a lack of oxygen and the generation of CO connected thereto.

According to the invention, it is additionally proposed that an oxygen containing gas stream be introduced or injected into the furnace downstream from the point of introduction of the fuel-rich gas stream, for example downstream from the substoichiometrically operated burner. In this way it is possible to inject gas containing oxygen at high speed into the combustion gases, in order to thoroughly mix the combustion gases and post-combust the CO. The introduction of the oxygen containing gas stream at high speed is advantageous, in order to suction in as much combustion gas as possible and mix it with oxygen, on the one hand, and to achieve recirculation of the combustion gases located in the furnace and thus dilute the oxidizer and fuel stream of the so-called air burner, on the other hand. This results in a reduction of the flame temperature, whereby the occurrence of NOx is in turn reduced. Since the post-combustion of CO within the furnace occurs on its exhaust gas side, a temperature increase in the exhaust gas regenerator (i.e., in the heat exchanger assigned to the exhaust gas port) can be prevented. The invention thus results in a further reduction of the NOx concentration in comparison to known melting methods, without the danger of thermal damage to heat exchangers used for the regenerative operation of the furnace.

The term fuel-rich gas stream shall in particular include fuel-oxygen mixtures as well as pure fuelgas streams. In one embodiment of the invention, additionally or alternatively to a substoichiometrically operated burner (oxy-fuel burner) for introducing a fuel-rich fuel-oxygen mixture into the furnace, only fuel (without oxygen), for example, pure natural gas, is introduced or, even better, injected into the furnace via a fuel nozzle. This variant is possible since, through the introduction of the oxygen-containing gas stream, sufficient oxygen is available for combusting the additional fuel and for post-combusting incompletely burned fuel.

Pure oxygen is used as the oxygen containing gas stream. As already mentioned, the injection of the oxygen containing gas stream(s) at high speed is advantageous. Preferable lower limits of the inflow speed are 50 m/s, 100 m/s, or more preferably 150 m/s; preferred upper limits are 326 m/s (the speed of sound), preferably 200 m/s. It is advisable in this case to introduce or inject the gas stream as one or more thin jets into the furnace. To generate the high flow speeds, it is advantageous to inject the oxygen containing gas stream(s) via a Laval nozzle or a Venturi nozzle. Known lances, such as oxygen lances, can be used for injecting the oxygen containing gas stream(s).

Before preferred injection points for the gas are described, the geometric conditions of a melting furnace are to be explained: The processing direction originates from the burner port (air burner). This is followed downstream by one or more oxy-fuel burners or the mentioned fuel nozzle(s) (or also a combination of these two possibilities). Flow gas nozzles for introducing the oxygen containing gas stream(s) are provided further downstream on the furnace, which are in turn followed downstream by an exhaust gas port of the furnace.

The burner port and the exhaust gas port are located in the front side of the furnace. Both ports have one or more channels for the oxidizer supply (preferably air supply) and one or more channels for the fuel supply. The two ports are operated alternately, in the event of such a change, the previous burner port becoming the exhaust gas port and the previous exhaust gas port becoming the burner port. If a port is operated in its function as a burner port, an oxidizer (in particular air) is supplied thereto through the corresponding channels. The fuel supply occurs via the channels provided for this purpose. If a port is used as the exhaust gas port, the combustion gases are exhausted from the furnace via the channels otherwise provided for the oxidizer supply.

During the regenerative operation, the oxidizer or the combustion gases are conducted via the heat exchangers. The hot exhaust gases deliver their heat to the heat exchanger and in the next cycle the oxidizer (air) can absorb this heat again, whereby strongly preheated oxidizer (air) is available as the oxidizing agent for generating the burner flame. Both ports are arranged frontally on the same side in such an end-port furnace, and the U-shaped main flow direction of the combustion gases already described in the introduction to the description occurs. Such frontal melting furnaces (end-port furnaces) typically have their area of highest temperatures (hotspot) in an area in which the path of the combustion gases turns by 180°. This area is in the lower third of the furnace length, viewed from the front side of the furnace. The end side of the furnace, on which the outlet port for the liquid glass is located, lies opposite to the front side having the burner port and the exhaust gas port. The hotspot is located in the third of the furnace remote from the front side, which adjoins the end side. The furnace is bounded in the longitudinal direction, i.e., essentially perpendicular to the front side of the furnace, by side walls.

In the case of the above-described geometric conditions of typical melting furnaces, advantageous arrangements of the nozzles and burners may be understood easily: It is reasonable to introduce the oxygen containing gas stream(s) by means of at least one flow gas nozzle from one or more of the following points into the furnace interior: A front wall, a side wall, or an arch of the furnace, in particular in the area and in proximity to an exhaust gas port of the furnace. For example, a flow gas nozzle is therefore located in proximity to the exhaust gas port, this nozzle being arranged in a side wall, in the front wall, or in the arch or roof of the furnace. In the case of a furnace having alternately operated burner ports (air burners), one burner port is alternately used as the exhaust gas port in each case, so that corresponding flow gas nozzles must be provided at both possible points. These points are then located in the area of the burner port or exhaust gas port, in particular in the side wall and/or the front wall and/or the arch of the furnace.

The oxygen containing gas stream is preferably introduced into the third of the furnace adjoining the front side having the exhaust gas port. The oxygen containing gas stream is thus injected into the part of the furnace which is delimited by the front side and the side walls and extends over one third of the furnace length. In further preferred embodiments, the oxygen containing gas stream is introduced into the quarter, fifth, or tenth of the furnace adjoining the front side having the exhaust gas port. In the furnace longitudinal direction, i.e., in the direction perpendicular to the front side, the distance of the flow gas nozzle from the front side is at most 33%, at most 25%, at most 20%, at most 15%, or at most 10% of the longitudinal extension of the furnace, the longitudinal extension referring to the distance between front side and inside.

An arrangement is preferably located in a side wall of the furnace (in the case of alternately operated burner ports therefore in both side walls of the furnace), in general at least one of the oxygen containing gas streams not being injected into the exhaust gas stream precisely perpendicularly to the furnace wall, but rather in a direction having a vectorial component in the direction of the main flow direction of the combustion gases. Additional gas streams can be injected through variable position lances in order to meet the demand of low and high fire of the furnace.

The oxygen containing gas stream is to be introduced into the furnace on the exhaust gas side outside the burner flame generated by the burner port (air burner) in the furnace. As already explained, CO arising in this way can be post-combusted as optimally as possible and, on the other hand, the furnace exhaust gases (combustion gases) can be recirculated well, whereby oxidizer (combustion air) and fuel stream of the air burner are diluted.

In a further embodiment, a secondary oxygen containing stream is introduced into the furnace downstream from the point of introduction of the fuel-rich gas stream and upstream from the point of the introduction of the oxygen containing gas stream. In the mentioned further variant of the invention, the secondary oxygen containing stream is for example introduced into the furnace via at least one superstoichiometrically operated burner downstream from the point of introduction of the fuel-rich gas stream, and upstream from the mentioned injection of the oxygen containing gas stream. This superstoichiometrically operated burner is (like the substoichiometrically operated burner) advantageously arranged in the area of the hotspot of the furnace. Because of the oxygen excess, this burner (oxy-fuel burner or hotspot burner) supports the post-combustion of carbon monoxide (CO).

The secondary oxygen containing stream could be a 100% oxygen gas stream or an oxygen-rich fuel-oxygen mixture. According to a preferred embodiment the fuel-rich gas stream is a pure fuel stream and the secondary oxygen containing stream is a pure oxygen stream.

Of course it is also possible to introduce two or more secondary oxygen containing streams, two or more fuel-rich gas streams and/or two or more oxygen containing gas streams into the furnace.

The introduction of the secondary oxygen-containing stream(s) together with the introduction of the fuel-rich gas stream(s) results in a staging of the fuel and the oxygen at the hotspot. This reduces the NOx in the furnace whilst obtaining improved temperature control of the furnace.

In this embodiment, the following arrangements are advisable in a frontal melting furnace (end-port furnace): Originating from a frontally arranged burner port, a first flow gas nozzle is located on one side wall or longitudinal side of the furnace, in particular in the first third of the longitudinal side adjoining the front side. In particular in the lower third of this longitudinal side wall, adjoining the end side opposite to the front side, and also in particular at the height of the hotspot of the furnace, the substoichiometrically operated oxy-fuel burner and/or a fuel nozzle for introducing pure fuel (for example, natural gas) is located. On the opposite longitudinal side, the superstoichiometrically operated burner (second oxy-fuel burner) or an oxygen nozzle is arranged in the lower third, in particular opposite to the oxy-fuel burner or the fuel nozzle. A second flow gas nozzle is located in the upper, i.e., first third of the longitudinal side adjoining the front side, in particular opposite to the mentioned first flow gas nozzle. A further port is in turn frontally arranged further downstream. This symmetric arrangement is particularly preferable in the case of the mentioned frontal melting furnace. Of course, multiple flow gas nozzles can be arranged, in particular symmetrically at various points of the furnace (for example, additionally on the front side or in the arch). This is also true for the oxy-fuel burners, the fuel nozzle and the oxygen nozzle.

In the case of a furnace having alternately operated ports, the burner ports are alternately operated in the function of a burner port and an exhaust gas port, a changeover occurring after a specific cycle time, for example, between 10 and 30 min, in particular 15 to 25 min. The previous exhaust gas port then operates as the burner port and the previous burner port operates as the exhaust gas port. The main flow direction in the furnace also reverses accordingly and extends opposite to the previous main flow direction. Consequently the fuel-rich gas stream, the secondary oxygen containing stream and the oxygen containing gas stream have to be adapted to the reversed main flow direction. According to a preferred embodiment the fuel-rich gas stream and the secondary oxygen containing stream are changed as follows:
- First, the secondary oxygen containing stream is switched off.
- Then, a fuel-rich gas stream is introduced into the furnace from the furnace side from which the secondary oxygen containing stream has been supplied before. Roughly spoken, the secondary oxygen containing stream is shut and replaced by a fuel-rich gas stream. At this stage two fuel-rich gas streams are introduced into the furnace, but no secondary oxygen containing stream.
- In the next step, the original fuel-rich gas stream is switched off and another secondary oxygen containing stream is introduced into the furnace from the furnace side from which the original fuel-rich gas stream has been introduced.

In a preferred embodiment the furnace comprises at each side wall means for introducing a fuel-rich gas stream, means for introducing a secondary oxygen containing stream and means for introducing the oxygen containing gas stream, said means being arranged symmetrically. Preferably, the fuel-rich gas stream is pure fuel and the secondary oxygen containing stream is pure oxygen.

Furthermore, the invention relates to a device for melting melting stock, such as glass, having a furnace, which is implemented as an end-port furnace, two ports being provided in a front side of the furnace, both ports each alternately operable as burner port or exhaust gas port, and a heat exchanger being assigned to each of the ports. A fuel and an oxidizer can be supplied to the furnace via the burner port to implement a combustion reaction, in order to heat the furnace. The furnace has at least a first and a second substoichiometrically operable burner for introducing a fuel-rich gas stream into the furnace and/or at least a first and a second fuel nozzle for introducing a fuel or fuel mixture into the furnace, the substoichiometrically operable burners and/or the fuel nozzles being arranged in the half of the furnace which does not adjoin the front side having the burner port and the exhaust gas port. Furthermore, the furnace has a flow gas provision device and at least a first and a second flow gas nozzle for supplying a pure oxygen gas stream into the furnace, the flow gas nozzles being arranged in the half of the furnace which adjoins the front side having the burner port and the exhaust gas port.

Reference is expressly made to the above explanations in connection with the method according to the invention with respect to advantageous embodiments of this device.

The melting furnace is alternately operable (regeneratively), and has at least two ports, which are alternately operable, the combustion gases being exhausted via a second burner port, which functions in this case as the exhaust gas port, during the generation of a burner flame by supplying the oxidizer to a first burner port. For a regenerative operation, a heat exchanger is assigned to each of the at least two ports, through which the oxidizer or the exhaust gas flows depending on the operational path. At least one pair of alternately substoichiometrically operable burners, a first and a second substoichiometrically operable burner, or a pair of alternately operable fuel nozzles, a first and a second fuel nozzle, are provided for introducing a fuel-rich gas stream, especially pure fuel, into the furnace. At least one pair of alternately operable flow gas nozzles, a first and a second flow gas nozzle, are provided for introducing pure oxygen gas streams, the flow gas nozzles being arranged upstream from the heat exchanger and in proximity thereto. With this arrangement, it is to be ensured that remaining CO is combusted as completely as possible before it enters the heat exchanger, to prevent thermal damage therein. Flow gas nozzles and ports are operated alternately in the same cycle. The first and the second substoichiometrically operable burners are preferably arranged symmetrically with respect to the vertical lengthwise center plane of the furnace. The same preferably applies to the first and second flow gas nozzle.

If a secondary oxygen containing stream shall be introduced into the furnace, it is preferred to operate the first burner in substoichiometrical mode and the second burner in superstoichiometrical mode, i.e. the secondary oxygen containing stream is supplied via the second burner. After reversal of the main flow direction in the furnace the first burner will be operated as a superstoichiometric burner and the second burner will be operated as a substoichiometric burner. The first and the second burner are preferably arranged symmetrical to the vertical lengthwise center plane of the furnace.

In case the secondary oxygen containing stream is supplied via oxygen nozzles, a first and a second oxygen nozzle are provided symmetrically with respect to the vertical lengthwise center plane of the furnace. Preferably, the first and the second oxygen nozzles will be located closer to the front wall of the furnace with the burner ports than the first and the second substoichiometrically operable burners.

Reference is made to the above explanations for advantageous arrangements of the oxy-fuel burner(s) and/or the fuel nozzle(s) and the flow gas nozzles, in particular in a frontal melting furnace.

In practice, a flow gas provision device will be provided, which is designed and configured to provide a gas stream at such a pressure that the gas stream leaves the flow gas nozzle at a speed of advantageously at least 50 m/s, preferably at least 100 m/s, particularly preferably 150 m/s, the highest value of the speed being 326 m/s, particularly preferably 200 m/s. The gas stream is pure oxygen.

An essential advantage of the invention is that required limiting values, currently of less than 800 mg/Nm³ or less than 700 mg/ Nm³ exhaust gas for NOx, can be achieved, and existing furnace facilities in operation can be retrofitted to implement the invention. Constructing larger furnaces with the same performance or the additional construction of exhaust gas purification facilities can be dispensed with.

The regulation of the quantity of the pure oxygen via the flow gas nozzle or a corresponding lance can be performed with the aid of the measurement of the CO concentration or the residual oxygen concentration in the exhaust gas. The same regulation possibility results for the supplied fuel via the fuel nozzle and/or the substoichiometrically operated burner.

The mentioned burners (oxy-fuel burners, superstoichiometrically operable burners, substoichiometrically operable burners) or nozzles (flow gas nozzles, fuel nozzles and further oxygen nozzles) can be arranged essentially transversely to the flow direction in the furnace or also longitudinally to the flow direction. The use of flat flame burners is advantageous, in particular in the arch of the furnace, to achieve the best possible thorough mixing of combustion gas and oxygen or reducing agent (CO or CH₄). Since the flat flame burners result in a type of "fishtail" flame (widespread but thinner than a conventional, round burner), better permeation of the reducing oxy-fuel burner exhaust gases with the exhaust gases from the air burner can be achieved and therefore CO can be post-combusted better, and also NOx can be reduced better.

It is obvious that the above-mentioned features and the features still to be explained hereafter are usable not only in the respective specified combination but rather also in other combinations or alone, without leaving the scope of the invention.

The invention is schematically shown on the basis of an exemplary embodiment in the drawings and will be described in detail hereafter with reference to the drawings.

### Description of the Figures

Figure 1 schematically shows a top view of a melting furnace for melting glass according to a particularly advantageous embodiment according to the invention in a first operating cycle;
Figure 2 shows the melting furnace from Figure 1 in a second operating cycle;
Figure 3 shows another embodiment of the invention.

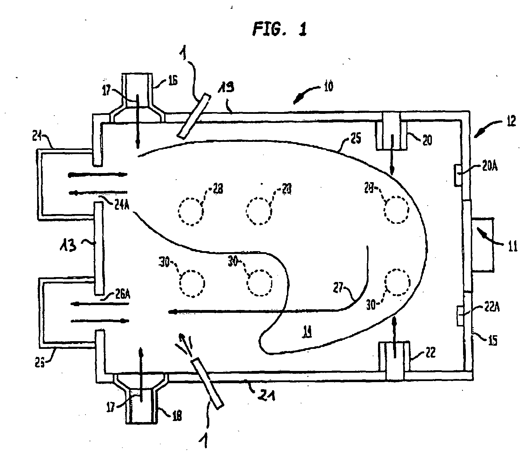

Figure 1 very schematically shows a melting furnace (furnace in short hereafter) 10 for melting glass. The furnace 10 is bounded by furnace walls 12, the front wall being designated by 13, the side wall located to the right of the front wall by 21, the side wall located to the left of the front wall by 19, and the end wall by 15. Burner ports, which are known per se from the prior art and are not shown separately here, are located at the positions 24A and 26A. A heat exchanger (or regenerator) 24 or 26 is assigned to each port 24A, 26A, respectively.

Charging front buildings (English: "doghouse") 16, 18, via which material required to produce a glass is supplied to the furnace 10, are located in each case in the side walls 19, 21 and in proximity to the ports 24A, 26A. The supply direction is identified by 17. Two burners 20, 22 are arranged opposite to one another in the lower third of the side walls 19, 21 viewed from the front wall 13. Alternative or additional positions for a burner 20 are identified by 20A and 28. While the position 20A is located on the end wall 15, the positions 28 are located in the arch or ceiling of the furnace 10. Alternative or additional positions for a burner 22 are identified by 22A and 30. The position 22A is again located on the end wall 15, while the positions 30 are located in the arch or ceiling of the furnace 10. In the positions 20A and 22A, the burners are arranged along the flow direction.

11 designates the outlet port for liquid, molten glass, which is located on the floor of the furnace 10.

In operation according to Figure 1, the furnace 10 is fired and heated by means of a burner arrangement at the port 24A. The burner port has fuel nozzles for introducing fuel, and supply lines for an oxidizing agent (oxidizer), typically air. The resulting combustion of the fuel results in a burner flame 25, which can also be designated as the heating burner flame or primary flame. The extent of the burner flame 25 is indicated in Figure 1. In the operating cycle of Figure 1, the port 24A is used as the burner port. In contrast, the port 26A is used as the exhaust gas port, through which the combustion gases (exhaust gases) leave the furnace 10 and enter the heat exchanger 26. The hot combustion gases (temperatures around 1500°C) heat the medium of the heat exchanger 26, typically heat storage bricks.

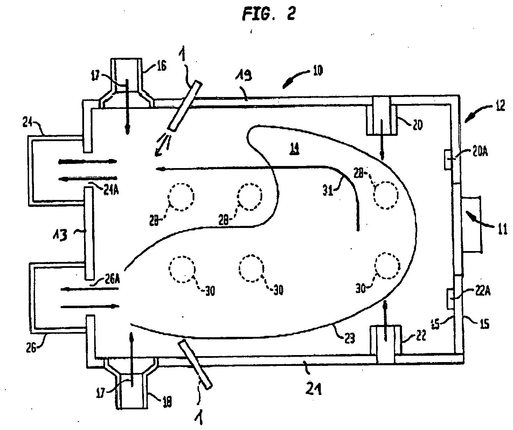

In the next operating cycle, which is shown in Figure 2, the port 26A is operated as the burner port, while the port 24A is used as the exhaust gas port. The combustion air used as the oxidizer here is supplied in this operating cycle via the heat exchanger 26 to the port 26A. The combustion air can be preheated on the medium of the heat exchanger and reaches high temperatures (around 1200°C). The subsequent combustion procedure can be made very efficient through this preheating of the combustion air. A burner flame 29 having the shape indicated in Figure 2 forms. Arising exhaust gases enter the (exhaust gas) port 24A. These exhaust gases can in turn heat the medium (heat storage bricks) located in the heat exchanger 24. The next operating cycle corresponds in alternating operation of the melting furnace 10 to the state shown in Figure 1. Such a change of the operating cycles typically occurs every 15 to 25 min. Because of the two frontally arranged burner ports 24A, 26A, a U-shaped flow path forms, which is designated by 27 in Figure 1 and by 31 in Figure 2.

The hotspot, i.e., the area having the highest temperatures in the furnace 10, lies essentially between the substoichiometrically operable burners or fuel nozzles designated by 20 and 22 and therefore in the area of the reversal of the main flow path. In the area of this hotspot, a low wall extends on the floor of the furnace 10, typically parallel to the end wall 15. The furnace is partitioned into a frontal trough area and a terminal refining area by this wall in the area of the hotspot. The hotspot and the wall extending therein are used to support the convection and optimize the glass melt. Further details on the construction and function of the components of a melting furnace 10 can be taken from the prior art.

The flow gas nozzles for supplying a pure oxygen gas stream into the combustion chamber 14 of the furnace 10 are identified by 1. In this exemplary embodiment, they have the form of oxygen lances. While the flow gas nozzle 1 arranged on the side wall 21 is active in the operating cycle according to Figure 1, the flow gas nozzle 1 located on the side wall 19 is active in the operating cycle according to Figure 2. In this exemplary embodiment, the flow gas nozzles are opposite one another in relation to the longitudinal axis of the furnace 10. The associated flow gas provision device is not shown for the sake of comprehensibility.

In the operating cycle according to Figure 1, the combustion products (combustion gases) produced by the burner port 24A reach the area of the burner 20, which represents a so-called oxy-fuel burner or hotspot burner. Oil or gas is typically used as the fuel. The burner 20 is operated fuel-rich or with 100% fuel and therefore substoichiometrically. Because of this oxygen deficiency and the resulting carbon monoxide (CO), the burner 20 causes a reduction of NOx, as already described in detail at another point.

The burner 22 can be operated oxygen-rich, i.e., superstoichiometrically, or as an oxygen lance with 100% oxygen. In this case, a part of the occurring CO would already be reduced. It has been shown that it can also be advisable to operate the burner 22 substoichiometrically like the burner 20. This results in an amplification of the effect induced by the burner 20. Further effects due to the burners 20 and 22 are a dilution of combustion air (oxidizer) and fuel stream in the burner flame 29, whereby this burner flame 29 is cooled. Such a cooling of the flame temperature, in particular at the hot points of the flame, results in a reduction of thermally generated NOx.

A further effective reduction of the NOx concentration, using which the recently required limiting value of 700 mg/Nm³ exhaust gas can be reached, can be achieved via the introduction of an oxygen containing gas stream on the exhaust gas side of the furnace 10 via the flow gas nozzle 1 (on the side wall 21). The mode of operation is as follows in this case: the oxygen containing gas stream mixes with the combustion gas stream and causes post-combustion of CO. In this way, the regenerator 26 can be protected from thermal damage. The injection speed of the oxygen containing gas stream into the furnace 10 is to be sufficiently high to ensure that adequate recirculation of the furnace exhaust gases (combustion gases) is achieved, which in turn has the result that combustion air and fuel stream of the air burner (burner port 24A here) are diluted. This results in the reduction of the flame temperature and therefore a further decrease of NOx. Preferred injection speeds are between 100 and 200 m/s in this exemplary embodiment. A high outflow speed is also known to result in increased suctioning of exhaust gas and therefore stronger mixing with the oxygen of the oxygen containing gas stream. In this exemplary embodiment, pure oxygen is injected via oxygen lances into the furnace interior.

The quantity of the injected oxygen can be regulated with the aid of a measurement of the CO concentration. For this purpose, a CO concentration measurement is performed at a suitable point upstream from the flow gas nozzle 1. The quantity of the oxygen required for the complete post-combustion of the CO can be calculated based thereon. Alternatively or additionally, this regulation can be performed via a measurement of the residual oxygen concentration in the exhaust gas. Empirical measurements have shown that the residual oxygen content in the furnace exhaust gas, measured in the regenerator head, is to be at least 1.0 - 1.5%.

Similar observations apply to the operating cycle shown in Figure 2. An oxygen containing gas stream is injected into the furnace 10 here via the flow gas nozzle 1 in the side wall 19 of the furnace 10. The burner 22 is now operated substoichiometrically, i.e., fuel-rich or with 100% fuel, during this operating cycle, while the burner 20 is now operated superstoichiometrically, i.e., oxygen-rich or with 100% oxygen. As already explained in connection with the preceding operating cycle, in practice, the burner 20 can also be operated substoichiometrically like the burner 22 in the operating cycle according to Figure 2. Since only the flow paths reverse in the operating cycle according to Figure 2, all other observations also apply in the same way here.

The injection direction of the oxygen containing gas stream can be oriented perpendicularly to the side wall 19 or 21. It has proven to be advantageous if the inflow direction of the oxygen containing gas stream has a vectorial component in the direction of the stream of the combustion gases (flow path 31 or 27). The angle of the oxygen lance shown can be set accordingly. Of course, only a planar section is shown in the figures; the orientation of the lance can be suitably performed in all three spatial directions, of course.

Alternative or additional positions for the burner 20 are designated by 20A and 28. Alternative or additional positions for the burner 22 are designated by 22A and 30. Reference is made to publication WO 2010/114714 A1, which was already mentioned in the introduction to the description, for more detailed explanations of these alternative or additional positions. In the mentioned publication, the burner 20 is operated substoichiometrically and the burner 22 is operated superstoichiometrically in the operating cycle of Figure 1. However, it is to be expressly noted that both burners, i.e., also the burner 22, can be operated substoichiometrically in the scope of the present application. This is made possible by the injection of the oxygen containing gas stream. If the burner 22 is also operated fuel-rich, the quantity of the injected oxygen containing gas stream (pure oxygen) is to be adapted accordingly.

Finally, it is to be emphasized once again that, alternatively or additionally to the burners 20 and 22 shown in Figures 1 and 2, at least one fuel nozzle can be used, via which a fuel or fuel mixture, in particular without the addition of an oxidizer, can be introduced or injected into the furnace. This case corresponds to the operation of a burner 20, 22 with air-fuel ratio 0. For this case, the reference numerals 20 and 22 can each stand for the position of one fuel nozzle and one oxygen nozzle. Depending on the operation mode, reference numeral 20 refers to a fuel nozzle and reference numeral 22 refers to an oxygen nozzle or, in the reverse operation mode, reference numeral 20 refers to an oxygen nozzle and reference numeral 22 refers to a fuel nozzle.

In practice, the burner 20 according to Figure 1 is to be operated strongly substoichiometrically, the air-fuel ratio lambda being between 0.1 and 0.8, preferably between 0.3 and 0.7, more preferably between 0.5 and 0.6. It is also preferred to introduce pure fuel via substoichiometrically operable burner 20 or fuel nozzle 20. It is conceivable to operate the further burner 22 somewhat less strongly substoichiometrically.

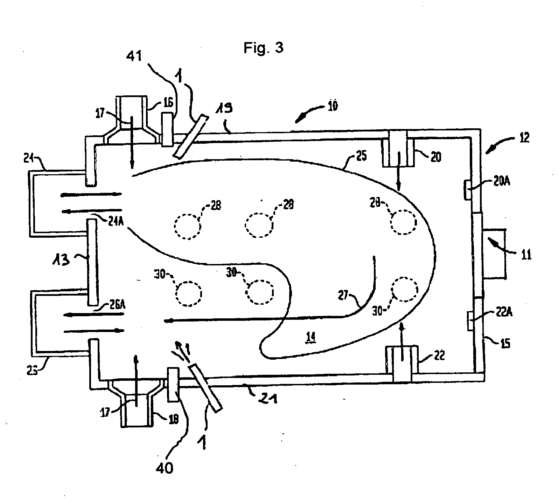

Figure 3 shows another preferred embodiment of the invention, similar to the one shown in figure 1, but with additional oxygen lances 40, 41. In the shown operation mode, furnace port 24 operates as burner port. Fuel and air are combusted to produce a flame 25 which extends through the furnace 10. In this particular embodiment reference numeral 20 stands for a fuel nozzle for injection of 100% fuel into the furnace 10. In the opposite side wall 21 an oxygen nozzle 22 is provided for injection of a pure oxygen stream into the furnace 10. Downstream of oxygen nozzle 22 and close to the exhaust port 26 a flow gas nozzle 1 is provided.

Via flow gas nozzle 1 an oxygen gas stream is injected into the furnace 10 in a direction to the burner port 24. The injected oxygen stream causes a flue gas recirculation back in the direction to the burner port 24 as already explained with reference to figure 1. In addition an oxygen lance 40 is provided close to the exhaust port 26 which introduces an oxygen-containing gas, preferably pure oxygen, in order to complete the combustion of CO.

Of course, since the furnace ports 24, 26 are alternately operated as burner and exhaust gas ports an oxygen lance 41 is also arranged in side wall 19. Oxygen lance 41 in side wall 19 will be used in the reverse mode when port 26 operates as burner port and port 24 as exhaust gas port. Furthermore, the furnace comprises a fuel nozzle in side wall 21 and an oxygen nozzle in side wall 19 in order to supply fuel and oxygen in the reverse mode (for clarity reasons the fuel nozzle in side wall 21 and oxygen nozzle in side wall 19 are not shown in figure 3).

The present invention causes a further reduction of NOx in the exhaust gas of melting furnaces and therefore is particularly well suitable for meeting legal requirements.

### List of reference numerals

- 1: flow gas nozzle
- 10: melting furnace, furnace
- 11: outlet port
- 12: furnace wall
- 13: front wall
- 14: combustion chamber
- 15: end wall
- 16: charging front building
- 17: supply direction
- 18: charging front building
- 19: side wall
- 20: burner
- 20A: burner position
- 21: side wall
- 22: burner
- 24: heat exchanger, regenerator
- 24A: port
- 25: burner flame
- 26: heat exchanger, regenerator
- 27: flow path
- 28: position in the arch
- 29: burner flame
- 30: position in the arch
- 31: flow path
- 40,41: oxygen lance

## Claims

1. A method for melting melting stock, such as glass, in a furnace, which is implemented as an end-port furnace, two ports being provided in a front side of the furnace, which are alternately operated as the burner port and exhaust gas port, wherein a heat exchanger (24, 26) being assigned to each burner port, a fuel and an oxidizer being supplied to the burner port and being caused to react and the resulting combustion gases flowing along an essentially U-shaped main flow direction through the furnace to the exhaust gas port, in relation to the main flow direction, **characterized by** at least one fuel-rich gas stream being introduced in the half of the furnace not adjoining the front side having the burner port and the exhaust gas port by means of at least a first and a second substoichiometrically operable burner (20; 22) and/or at least a first and a second fuel nozzle, and at least one oxygen containing gas stream being introduced into the half of the furnace adjoining the front side having the burner port and the exhaust gas port by means of at least a first and a second flow gas nozzle (1) downstream from the point of the introduction of the fuel-rich gas stream(s) (20; 22).
and that pure oxygen is used as the oxygen containing gas stream(s).

2. The method according to Claim 1, **characterized in that** the oxygen containing gas stream(s) is introduced into the furnace (10) at a speed of at least 50 m/s, preferably at least 100 m/s, more preferably at least 150 m/s, and at most 326 m/s, preferably at most 200 m/s.

3. The method according to one of the preceding claims, **characterized in that** the oxygen containing gas stream(s) is introduced into the furnace (10) in the area of an exhaust gas port (24A; 26A) of the furnace, in particular into the third, fourth, fifth, or tenth of the furnace adjoining the front side having the exhaust gas port.

4. The method according to one of the preceding claims, **characterized in that** the oxygen containing gas stream(s) is introduced into the furnace perpendicularly or at another angle to the respective wall (12) of the furnace (10).

5. The method according to one of the preceding claims, **characterized in that** the oxygen containing gas stream(s) is introduced into the furnace (10) on the exhaust gas side outside the burner flame (25; 29) generated by the burner port.

6. The method according to one of the preceding claims, **characterized in that** at least one secondary oxygen containing stream, especially a 100% oxygen stream, is introduced into the furnace downstream from the point of the introduction of the fuel-rich gas stream(s) and upstream from the point of the introduction of the oxygen containing gas stream(s).

7. The method according to claim 6, **characterized in that** one of the ports is switched from operation as burner port to operation as exhaust gas port and the other port is switched from operation as exhaust gas port to operation as burner port and that
a. the secondary oxygen containing stream(s) is switched off,
b. then another fuel-rich gas stream(s) is introduced into the furnace from the furnace side from which the secondary oxygen containing stream(s) has been supplied before,
c. then the fuel-rich gas stream(s) originally being introduced into the furnace is switched off and
d. then another secondary oxygen containing stream(s) is introduced into the furnace from the furnace side from which the fuel-rich gas stream(s) has been originally introduced into the furnace.

8. The method according to one of the preceding claims, **characterized in that** said oxygen containing gas stream(s) and/or an additional oxygen stream(s) are introduced into the furnace in a direction to the port which is operated as the burner port.

9. A device for melting melting stock, such as glass, having a furnace (10), which is implemented as an end-port furnace, two ports being provided in a front side of the furnace, both ports each alternately operable as burner port or as exhaust gas port, and a heat exchanger (24, 26) being assigned to each burner port, fuel and oxidizer being able to be supplied to the furnace via the burner port to form a combustion reaction (25; 29), in order to heat the furnace (10),
and having at least a first and a second substoichiometrically operable burner (20; 22) and/or having at least a first and a second fuel nozzle for introducing a fuel-rich gas stream into the furnace (10), the first and the second substoichiometrically operable burner (20; 22) and/or the first and the second fuel nozzle being arranged in the half of the furnace not adjoining the front side having the burner port and the exhaust gas port, **characterized by** having a flow gas provision device and at least a first and a second flow gas nozzle (1) for supplying a pure oxygen gas stream into the furnace, the first and the second flow gas nozzle (1) being arranged in the half of the furnace adjoining the front side having the burner port and the exhaust gas port.

10. The device according to Claim 9, **characterized in that** the first and the second flow gas nozzle (1) are designed as a Laval nozzle or Venturi nozzle.

11. The device according to one of the Claims 9 or 10 **characterized in that** the first and the second flow gas nozzle (1) are adjustable with respect to its position and/or angle to enable flexibility and optimization of process.

12. The device according to one of Claims 9 to 11, **characterized in that** the first and the second flow gas nozzle (1) are arranged on a side wall (19, 21) and/or front side (13) and/or an arch of the furnace (10), the distance of the first and the second flow gas nozzle from the front side being at most 33%, at most 25%, at most 20%, at most 15%, or at most 10% of the longitudinal extension of the furnace in the direction perpendicular to the front side.

13. The device according to one of Claims 9 to 12, **characterized in that** the first and the second substoichiometrically operable burner (20; 22) and/or the first and the second fuel nozzle are arranged in opposing side walls of the furnace, and that a first and second superstoichiometrically operable burner (22;

## Patentansprüche

1. Verfahren zum Schmelzen von Schmelzmasse wie Glas in einem Ofen, der als Ofen mit U-Flammenführung implementiert ist, wobei zwei Öffnungen in einer Vorderseite des Ofens bereitgestellt werden, die abwechselnd als Brenneröffnung und Abgasöffnung betrieben werden, wobei jeder Brenneröffnung ein Wärmetauscher (24, 26) zugeordnet ist, wobei ein Brennstoff und ein Oxidationsmittel der Brenneröffnung zugeführt werden und zur Reaktion gebracht werden, wobei die resultierenden Verbrennungsgase in Bezug auf die Hauptströmungsrichtung entlang einer im Wesentlichen U-förmigen Hauptströmungsrichtung durch den Ofen zu der Abgasöffnung strömen, **gekennzeichnet dadurch, dass** mindestens eine brennstoffreiche Gasströmung in die Hälfte des Ofens, die nicht an die Vorderseite mit der Brenneröffnung und der Abgasöffnung angrenzt, durch mindestens einen ersten und einen zweiten unterstöchiometrisch betreibbaren Brenner (20; 22) und/oder mindestens eine erste und eine zweite Brennstoffdüse eingeleitet wird und mindestens eine sauerstoffhaltige Gasströmung in die Hälfte des Ofens, die nicht an die Vorderseite mit der Brenneröffnung und der Abgasöffnung angrenzt, durch mindestens eine erste und eine zweite Strömungsgasdüse (1) stromabwärts der Stelle der Einleitung der brennstoffreichen Gasströmung(en) (20; 22) eingeleitet wird und dass reiner Sauerstoff als die sauerstoffhaltige(n) Gasströmung(en) verwendet wird.

2. Verfahren nach Anspruch 1, **dadurch gekennzeichnet, dass** die sauerstoffhaltige(n) Gasströmung(en) mit einer Geschwindigkeit von mindestens 50 m/s in den Ofen (10) eingeleitet wird/werden, vorzugsweise von mindestens 100 m/s, mehr bevorzugt von mindestens 150 m/s und höchstens von 326 m/s, vorzugsweise höchstens von 200 m/s.

3. Verfahren nach einem der vorhergehenden Ansprüche, **dadurch gekennzeichnet, dass** die sauerstoffhaltige(n) Gasströmung(en) in den Ofen (10) im Bereich einer Abgasöffnung (24A; 26A) des Ofens eingeleitet wird/werden, insbesondere in die dritte, vierte, fünfte oder zehnte des Ofens, die an die Vorderseite mit der Abgasöffnung angrenzt.

4. Verfahren nach einem der vorhergehenden Ansprüche, **dadurch gekennzeichnet, dass** die sauerstoffhaltige(n) Gasströmung(en) senkrecht oder mit einem anderen Winkel der zugehörigen Wand (12) des Ofens (10) in den Ofen eingeleitet wird/werden.

5. Verfahren nach einem der vorhergehenden Ansprüche, **dadurch gekennzeichnet, dass** die sauerstoffhaltige(n) Gasströmung(en) auf der Abgasseite außerhalb der Brennflamme (25; 29), die von der Brenneröffnung erzeugt wird, in den Ofen (10) eingeleitet wird/werden.

6. Verfahren nach einem der vorhergehenden Ansprüche, **dadurch gekennzeichnet, dass** mindestens eine sekundäre sauerstoffhaltige Strömung, insbesondere eine 100 %-ige Sauerstoffströmung stromabwärts der Stelle der Einleitung der brennstoffreichen Gasströmung (2) und stromaufwärts der Stelle der Einleitung der sauerstoffhaltigens Gasströmung (2) in den Ofen eingeleitet wird.

7. Verfahren nach Anspruch 6, **dadurch gekennzeichnet, dass** eine der Öffnungen vom Betrieb als Brenneröffnung zum Betrieb als Abgasöffnung umgeschaltet wird und dass die andere Öffnung vom Betrieb als Abgasöffnung zum Betrieb als Brenneröffnung umgeschaltet wird, und dadurch dass:
a. die sekundäre(n) sauerstoffhaltige(n) Strömung(en) ausgeschaltet wird/werden,
b. dann eine oder weitere brennstoffreiche Gasströmungen in den Ofen aus der Ofenseite eingeleitet werden, aus der zuvor die sekundäre(n) sauerstroffhaltige(n) Strömung(en) eingeleitet wurde/n,
c. dann die brennstoffreiche(n) Gasströmung(en), die ursprünglich in den Ofen eingeleitet wurden, abgeschaltet werden und
d. dann eine oder weitere sauerstoffhaltige Gasströmungen in den Ofen aus der Ofenseite eingeleitet werden, aus der die brennstoffreiche(n) Strömung(en) ursprünglich in den Ofen eingeleitet wurde/n.

8. Verfahren nach einem der vorhergehenden Ansprüche, **dadurch gekennzeichnet, dass** die sauerstoffhaltige(n) Gasströmung(en) und/oder eine oder zusätzliche Sauerstoffströmungen in einer Richtung der Öffnung in den Ofen eingeleitet werden, die als Brenneröffnung betrieben wird.

9. Vorrichtung zum Schmelzen von Schmelzmasse wie Glas mit einem Ofen (10), der als Ofen mit U-Flammenführung implementiert ist, wobei zwei Öffnungen in einer Vorderseite des Ofens bereitgestellt werden, wobei beide Öffnungen abwechselnd als Brenneröffnung oder Abgasöffnung betrieben werden können, und ein Wärmetauscher (24, 26) jeder Brenneröffnung zugeordnet ist, wodurch Brennstoff und Sauerstoff dem Ofen über die Brenneröffnung zugeführt werden können, um eine Verbrennungsreaktion (25; 29) zu bilden, um den Ofen (10) zu erwärmen,
und mindestens einen ersten und einen zweiten unterstöchiometrisch betreibbaren Brenner (20; 22) aufweisen und/oder mindestens eine erste und eine zweite Brennstoffdüse zum Einleiten einer brennstoffreichen Gasströmung in den Ofen (10) aufweisen, wobei der erste und der zweite unterstöchiometrisch betreibbare Brenner (20; 22) und/oder die erste und die zweite Brennstoffdüse in der Hälfte des Ofens angeordnet ist/sind, die nicht an die Vorderseite mit der Brenneröffnung und die Abgasöffnung angrenzt, **gekennzeichnet durch** das Aufweisen einer Vorrichtung zur Bereitstellung von Strömungsgas und mindestens einer ersten und einer zweiten Strömungsgasdüse (1) zum Zuführen einer sauerstoffhaltigen Gasströmung in den Ofen, wobei die erste und die zweite Strömungsgasdüse (1) in der Hälfte des Ofens angeordnet sind, die an die Vorderseite mit der Brenneröffnung und der Abgasöffnung angrenzen.

10. Vorrichtung nach Anspruch 9, **dadurch gekennzeichnet, dass** die erste und die zweite Strömungsgasdüse (1) als Laval-Düse oder Venturi-Düse ausgestaltet sind.

11. Vorrichtung nach einem der Ansprüche 9 oder 10, **dadurch gekennzeichnet, dass** die erste und die zweite Strömungsgasdüse (1) in Bezug auf ihre Position und/oder ihren Winkel einstellbar sind, um eine Flexibilität und Optimierung des Prozesses zu ermöglichen.

12. Vorrichtung nach einem der Ansprüche 9 bis 11, **dadurch gekennzeichnet, dass** die erste und die zweite Strömungsgasdüse (1) an einer Seitenwand (19, 21) und/oder Vorderseite (13) und/oder einem Lichtbogen des Ofens (10) angeordnet sind, wobei der Abstand der ersten und der zweiten Strömungsgasdüse von der Vorderseite höchstens 33%, höchstens 25%, höchstens 20%, höchstens 15% oder höchstens 10% der Längsausdehnung des Ofens in senkrecht zu der Vorderseite verlaufender Richtung beträgt.

13. Vorrichtung nach einem der Ansprüche 9 bis 12, **dadurch gekennzeichnet, dass** der erste und der zweite unterstöchiometrisch betreibbare Brenner (20; 22) und/oder die erste und die zweite Brennstoffdüse in gegenüberliegenden Seitenwänden des Ofens angeordnet sind, und dadurch, dass ein erster und ein zweiter überstöchiometrisch betreibbarer Brenner (22; 20) und/oder eine erste und eine zweite Sauerstoffdüse zum Zuführen einer sekundären sauerstoffhaltigen Strömung in den Ofen (10) vorgesehen sind, wobei der erste und der zweite überstöchiometrisch betreibbare Brenner (22; 20) und/oder die erste und die zweite Sauerstoffdüse in den gegenüberliegenden Seitenwänden angeordnet sind.

## Revendications

1. Procédé de fusion d'une masse fusible, telle que du verre, dans un four, qui est conçu comme un four à flammes longitudinales, deux ports étant prévus dans un côté avant du four, qui sont utilisés alternativement en tant que port de brûleur et port de gaz d'échappement, un échangeur de chaleur (24, 26) étant affecté á chaque port de brûleur, un combustible et un oxydant étant fournis au port de brûleur et étant entraînés à réagir, et les gaz de combustion qui en résultent s'écoulant le long d'une direction d'écoulement principale essentiellement en forme de U à travers le four jusqu'au port de gaz d'échappement, en relation avec la direction d'écoulement principale, **caractérisé en ce qu'**au moins un courant de gaz riche en combustible est introduit dans la moitié du four qui n'est pas contiguë au côté avant comportant le port de brûleur et le port de gaz d'échappement, au moyen d'au moins un premier et un deuxième brûleurs actionnables de façon sous-stoechiométrique (20; 22) et/ou d'au moins une première et une deuxième tuyères de combustible, et au moins un courant de gaz contenant de l'oxygène est introduit dans la moitié du four qui est contiguë au côté avant comportant le port de brûleur et le port de gaz d'échappement au moyen d'au moins une première et une deuxième tuyères de gaz d'écoulement (1) en aval du point d'introduction du (des) courant (s) de gaz riche en combustible (20; 22) et **en ce que** l'on utilise de l'oxygène pur pour le(s) courant(s) de gaz contenant de l'oxygène.

2. Procédé selon la revendication 1, **caractérisé en ce que** le(s) courant(s) de gaz contenant de l'oxygène est (sont) introduit(s) dans le four (10) à une vitesse d'au moins 50 m/s, de préférence d'au moins 100 m/s, mieux encore d'au moins 150 m/s, et au maximum de 326 m/s, de préférence au maximum de 200 m/s.

3. Procédé selon l'une quelconque des revendications précédentes, **caractérisé en ce que** le(s) courant(s) de gaz contenant de l'oxygène est (sont) introduit(s) dans le four (10) dans la région d'un port de gaz d'échappement (24A; 26A) du four, en particulier dans le tiers, le quart, le cinquième ou le dixième du four contigu au côté avant comportant le port de gaz d'échappement.

4. Procédé selon l'une quelconque des revendications précédentes, **caractérisé en ce que** le(s) courant(s) de gaz contenant de l'oxygène est (sont) introduit(s) dans le four perpendiculairement ou selon un autre angle par rapport à la paroi respective (12) du four (10).

5. Procédé selon l'une quelconque des revendications précédentes, **caractérisé en ce que** le(s) courant(s) de gaz contenant de l'oxygène est (sont) introduit(s) dans le four (10) sur le côté de gaz d'échappement à l'extérieur de la flamme de brûleur (25; 29) générée par le port de brûleur.

6. Procédé selon l'une quelconque des revendications précédentes, **caractérisé en ce qu'**au moins un courant secondaire contenant de l'oxygène, en particulier un courant constitué de 100 % d'oxygène, est introduit dans le four en aval du point d'introduction du courant (2) de gaz riche en combustible et en amont du point d'introduction du courants (2) de gaz contenant de l'oxygène.

7. Procédé selon la revendication 6, **caractérisé en ce que** l'un des ports est commuté d'un fonctionnement en tant que port de brûleur vers un fonctionnement en tant que port de gaz d'échappement, et l'autre port est commuté d'un fonctionnement en tant que port de gaz d'échappement vers un fonctionnement en tant que port de brûleur, et **en ce que**:
a. le(s) courant(s) secondaire(s) contenant de l'oxygène est (sont) arrêté(s);
b. ensuite un ou plusieurs autre(s) courant(s) de gaz riche en combustible est (sont) introduit (s) dans le four à partir du côté du four à partir duquel le (s) courant(s) secondaire(s) contenant de l'oxygène a (ont) été fourni(s) précédemment;
c. ensuite le(s) courant(s) de gaz riche en combustible introduit(s) initialement dans le four est (sont) arrêté(s); et
d. ensuite un ou plusieurs autre(s) courant(s) secondaire(s) contenant de l'oxygène est (sont) introduit (s) dans le four à partir du côté du four à partir duquel le(s) courant(s) de gaz riche en combustible a (ont) été initialement introduit(s) dans le four.

8. Procédé selon l'une quelconque des revendications précédentes, **caractérisé en ce que** ledit (lesdits) courant(s) de gaz contenant de l'oxygène et/ou un ou plusieurs courant(s) d'oxygène supplémentaire(s) sont introduits dans le four dans une direction vers le port qui est utilisé comme port de brûleur.

9. Dispositif de fusion d'une masse fusible, telle que du verre, comprenant un four (10) qui est conçu comme un four à flammes longitudinales, deux ports étant prévus dans un côté avant du four, les deux ports pouvant alternativement être utilisés en tant que port de brûleur ou en tant que port de gaz d'échappement, et un échangeur de chaleur (24, 26) qui est affecté à chaque port de brûleur, un combustible et un oxydant pouvant être fournis au four par l'intermédiaire du port de brûleur pour déclencher une réaction de combustion (25; 29), dans le but de chauffer le four (10), et comprenant au moins un premier et un deuxième brûleurs actionnables de façon sous-stoechiométrique (20; 22) et/ou comprenant au moins une première et une deuxième tuyères de combustible pour introduire un courant de gaz riche en combustible dans le four (10), les premier et deuxième brûleurs actionnables de façon sous-stoechiométrique (20; 22) et/ou les première et deuxième tuyères de combustible sont agencé(e)s dans la moitié du four qui n'est pas contiguë au côté avant comportant le port de brûleur et le port de gaz d'échappement, **caractérisé par** un dispositif de fourniture de gaz d'écoulement et au moins une première et une deuxième tuyères de gaz d'écoulement (1) pour amener un courant de gaz contenant de l'oxygène dans le four, les première et deuxième tuyères de gaz d'écoulement (1) étant agencées dans la moitié du four qui est contiguë au côté avant comportant le port de brûleur et le port de gaz d'échappement.

10. Dispositif selon la revendication 9, **caractérisé en ce que** les première et deuxième tuyères de gaz d'écoulement (1) sont conçues comme une tuyère de Laval ou une tuyère de Venturi.

11. Dispositif selon la revendication 9 ou 10, **caractérisé en ce que** l'angle et/ou la position des première et deuxième tuyères de gaz d'écoulement (1) est (sont) réglable(s) de manière à assurer la flexibilité et l'optimisation du procédé.

12. Dispositif selon l'une quelconque des revendications précédentes 9 à 11, **caractérisé en ce que** les première et deuxième tuyères de gaz d'écoulement (1) sont agencées sur une paroi latérale (19, 21) et/ou sur le côté avant (13) et/ou sur une voûte du four (10), la distance entre les première et deuxième tuyères de gaz d'écoulement et le côté avant correspondant au maximum à 33 %, au maximum à 25 %, au maximum à 20 %, au maximum à 15 % ou au maximum à 10 % de l'étendue longitudinale du four dans la direction perpendiculaire au côté avant.

13. Dispositif selon l'une quelconque des revendications précédentes 9 à 12, **caractérisé en ce que** les premier et deuxième brûleurs actionnables de façon sous-stoechiométrique (20; 22) et/ou les première et deuxième tuyères de combustible sont agencé(e)s dans des parois latérales opposées du four, et **en ce qu'**un premier et un deuxième brûleur actionnables de façon sur-stoechiométrique (22 ; 20) et/ou une première et une seconde tuyère à oxygène pour fournir un flux secondaire contenant de l'oxygène dans le four (10) sont prévus, le premier et le deuxième brûleur actionnables de façon sur-stoechiométrique (22 ; 20) et/ou la première et la seconde tuyère à oxygène étant disposés dans lesdites parois latérales opposées.
